# EUROPEAN PATENT SPECIFICATION

(11) **EP 3 939 773 B1**
(45) Date of publication and mention of the grant of the patent: **26.02.2025**
(21) Application number: 20768937.3
(22) Date of filing: 24.01.2020
(51) Int. Cl.: B29C 64/118, B29C 64/232, B29C 64/236, B29C 64/245, B33Y 30/00, B33Y 10/00, B29C 64/393

(54) **METHOD AND DEVICE FOR PRODUCING PARTS BY ADDITIVE MANUFACTURING**
VERFAHREN UND VORRICHTUNG ZUR HERSTELLUNG VON ARTIKELN DURCH ADDITIVE FERTIGUNG
PROCÉDÉ ET DISPOSITIF DE FABRICATION D'ARTICLES PAR DES TECHNOLOGIES D'ADDITION

(30) Priority: 11.03.2019 RU 2018144131
(43) Date of publication of application: 19.01.2022
(73) Proprietor: Stereotech Limited Liability Company, Volgogradskaya obl., Volgograd, 400001 (RU)
(72) Inventor: AVDEEV, Artem Romanovich, Volgograd, 400074 (RU); GUSCHIN, Ilya Alexandrovich, Volgograd, 400120 (RU); DROBOTOV, Alexey Vladimirovich, Volgograd, 400009 (RU); SHVETS, Andrey Alexandrovich, Volgograd, 400050 (RU)
(74) Representative: Gamba, Alessandro
(86) International application number: PCT/RU2020/050006
(87) International publication number: WO 2020/185122

(56) References cited:
- WO-A1-2011/011818
- WO-A1-2016/019435
- WO-A1-2016/030782
- CN-A- 106 003 728
- CN-A- 108 773 066
- CN-U- 205 871 201
- RU-U1- 186 514
- US-A1- 2016 067 928
- US-A1- 2016 096 323

## Description

The invention relates to the technology of layerwise objects production based on a digital model by the way of layerwise application of material, when producing 3D objects using an additive process.

One of the currently widely used additive 3D layerwise printing processes is the Fuse Deposition Modeling (FFF/FDM). The FDM process includes the following stages: dividing of a 3D digital model into the plurality of thin flat layers and compiling a program for each of such layers' production, the said program including a plurality of the printing head linear movements accompanied by the feeding of the material. The totality of each of the layers' production programs is combined into the object production program as a whole and is sent to the additive production system that creates the object in a layerwise manner based on this program. Each layer is applied over the previous layer until the object is completely built. The accessory material can be used for supporting the overhanging elements of the object.

There are known systems and methods of the 3D objects additive production based on the layerwise production of objects on flat working surfaces (substrates) by the way of the fluid (thermoplastic) material extrusion. The material used for modeling is extruded through an extrusion-type nozzle carried over by an extrusion head and is applied on the substrate in the form of a sequence of tracks, in the X-Y piane. The extruded modeling material melts and hardens as the temperature drops. The position of the extrusion head relative the substrate is then augmented along the Z-axis (perpendicularly to the X-Y piane), after which the process is repeated to form a 3D model resembling the digital representation (e.g., application U S2013224423, publication date 29.08.2013, STRATASYS INC.)

Although the known methods of the layerwise production provide the 3D objects formation, there are limitations related to the low product strength in vertical direction that is comparable to the product strength in horizontal direction since the interlaminar binding of the polymer is less effective than the binding within the layer. An example of a device for 3D objects formation and a method of using the same having these drawbacks is known in document WO2016/019435A1.

To solve this problem, additive processes have been created wherein the materials are applied onto cylindrical working (receiving) surfaces.

Thus, a 3D printer is known comprising a receiving cylindrical surface rotating about its own axis and an applicator configured to apply the material onto the said surface, wherein the applicator and the receiving cylindrical surface travel relative one another in the direction that is transverse to the rotation axis. A controller that is part of a 3D printer accepts the object production program, the instruction being represented in the form of a plurality of linear (or angular) movements along each of the 3D printer axes. In the process, the controller coordinates the rotation of the receiving cylindrical surface, the applicator offset relative thereof and the process of the material application by the applicator; the simultaneous movement of the print head and of the produced object along the said elements causing the formation of the three dimensional (curved) layers of material. A sequential application of such layers of various shapes by the 3D printer results in the formation of an object (application US2012165969 A1, date of publication 28.06.2012, Zydex Pty Ltd.) WO 2011/011818 A1 also discloses additive manufacturing devices and methods with cylindrically shaped receiving surfaces.

According to the known solution, the method of production consists in the determination of the object production program for a device, based on the 3D model of the object; the said program comprising a plurality of the curved layers of the material that have to be sequentially applied by the device. This program is sent to the printing device that applies the material onto the receiving cylindrical surface by flat layers.

One of the disadvantages of the Zydex Pty Ltd. process consists in the high object production labor content and the limited number of the possible object shapes due to the necessity to conduct printing on a prefabricated receiving cylindrical surface that becomes part of the object and requires further mechanical processing or must be removed by certain means. Although the object printed in such a manner consists of curved layers, it does not acquire additional strength since each of the layers still consists of short lines of material.

An object production device is known comprising a receiving cylindrical surface for receiving the layers of the material, a drive for rotating a rod and a print head for applying the material onto the receiving cylindrical surface for the formation of an object, wherein the receiving cylindrical surface is fixed in a rotor collet closing mechanism. The object production method includes the application of the material onto the rod by a print head, the rod rotation, the moving of the print head in the direction parallel to the longitudinal axis of the rod and the subsequent removal of the cylindrical working surface after the object is produced (application US2016096323 A1, date of publication 07.04.2016, Tyco Electronics Corp.)

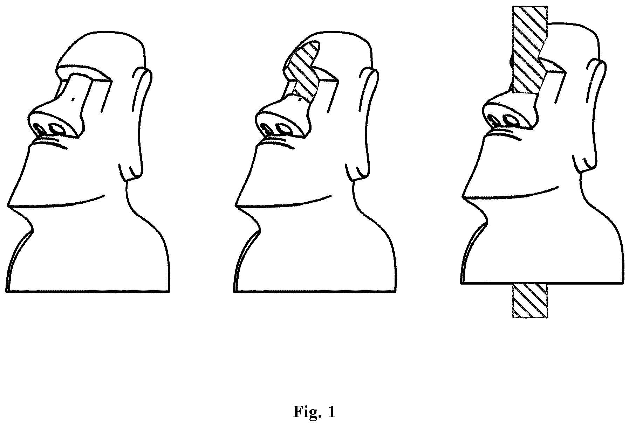

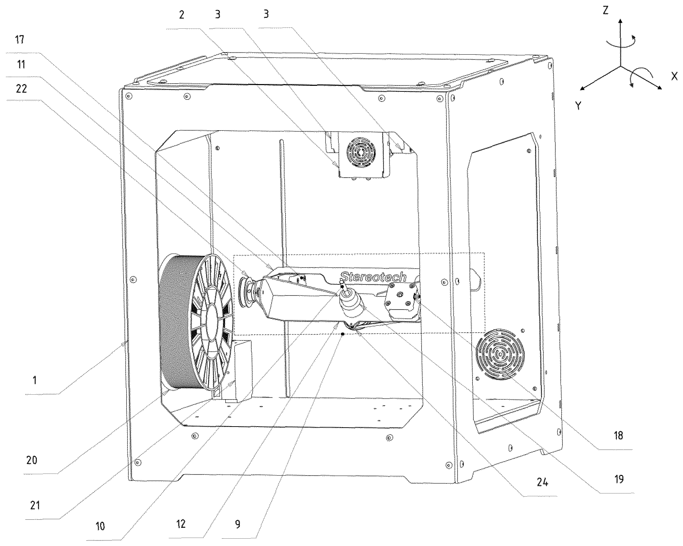

The disadvantage of the known device and the object production method of Tyco Electronics Corp. consists in the absence of the possibility to produce the working rod using the print head since only a ready-made rod can be used which results in the necessity to further process the products that have already been made. Although the described method of production allows obtaining robust layers, the manufactured products require a mechanical post-processing of the ends of the working rod that protrude beyond the product edges (see Fig. 1). This boosts the objects production labor content and introduces limitations on their shape.

A method of the objects production is known that includes controlling the receiving cylindrical surface rotation mechanism controller (the same cylindrical surface being fixed within the bounds of at least two supports), the formation of layers by a plurality of ejectors arranged in any of at least two print heads provided with various materials on a rotating receiving cylindrical surface, the operation of a controller with at least one actuating mechanism operably linked to at least two print heads and a hardening device providing each of the print heads' and the hardening device' movement independent of one another in the direction that is parallel to the cylindrical working surface rotation axis, to ensure the forming and hardening of layers on the rotating cylindrical working surface (application CIIIA US2018244033 A1, date of publication 30.08.2018, Xerox Corp.)

The disadvantage of the described 3D objects production method of Xerox Corp. consists in the high object production labor content and the limited variety of the produced objects shapes due to the necessity of conducting the printing process on a prefabricated receiving cylindrical surface that becomes part of the object and requires further mechanical processing or the removal by certain means. That said, the produced object should necessarily be bigger in thickness and smaller in length than the cylindrical working surface. Again, this method provides only for the production of cylindrical products (rotation bodies), which limits the variety of produced objects.

A 3D printer is known which comprises a printing surface configured to rotate around its axis, a print head arranged in close proximity of the working surface and directed perpendicularly to it (wherein the print head is configured to apply the material used in the production of the object at least onto a portion of the working surface or heated element arranged at least on a portion of the working surface), and a base located in close proximity of the print head and contacting the print surface, wherein the base is configured to move in the forward, backward and lateral directions relative to the print head (application US20160318247 A1, date of publication 03.11.2016, Warsaw Orthopedic Inc.)

The disadvantage of the described 3D printer of Warsaw Orthopedic Inc. consists in the limited variety of the produced objects shapes due to the necessity of conducting the printing process on a prefabricated surface that must be subsequently removed; in the process, the printed object can very likely be damaged. Warsaw Orthopedic Inc. do not consider the possibility of creating the objects of geometrically complex shapes.

An additive production device («a lathe») is known, as well as the method of object formation based on the cylindrical coordinates (R, Theta, Z) utilized by the said device. The known device comprises a semi-finished product in the form of a rod having round cross-section, a print head, an extruder, a motor unit having a step motor that controls the semi-finished product rotation about the Theta axis, a second step motor that controls the extruder movement along the Z-axis and a third step motor that controls the extruder movement along the semi-finished product and along the radial axis as the semi-finished product rotates about the Theta axis (application US2018297280 A1, date of publication 18.10.2018, Elizabeth Silvestro).

The known Elizabeth Silvestro device utilizes an additive production method comprising the arrangement of a semi-finished product in the form of a round rod in the motor unit having a step motor with Theta-axis, that controls the semi-finished product rotation about the Theta-axis, the application of material by the extruder onto the semi-finished product under the control of the Z-axis step motor and of at least one radial axis step motor that together control the extruder movement in the direction of the Z-axis and the direction of the radial axis along the semi-finished product when the semi-finished product is rotated by the Theta-axis step device, as well as control the Theta-axis step motor operation, the Z-axis step motor operation and the operation of at least one radial axis step motor for the application of the material by the extruder onto the semi-finished product based on the object model represented in cylindrical coordinates.

The disadvantage of the known device and method is the necessity to further process the products that have already been made since only one ready-made semi-finished product in the form of a rod is used, the same semi-finished product protruding beyond the product edges; also, the rod cannot be produced with the print head. Although the described method of production allows obtaining robust layers, the manufactured products require a mechanical post-processing of the ends of the working rod that protrude beyond the product edges.

A known device comprises a print head for the first material extrusion, a container with a liquid or granulated second material and a flat receiving surface installed in the container, wherein the print head and the flat receiving surface can be fixed on manipulators to move along the three linear coordinates and to angularly rotate about one, two or three axes. A manipulator comprises a flat receiving surface, one or more telescoping joints and the rotary joints (connected to the telescoping joints) on which the receiving surface is installed (international application WO 2016019435 A1, date of publication 11.02.2016, LAING O'ROURKE AUSTRALIA PTY LIMITED).

The above disclosure implements an additive production method that includes the application of the material strings in the form of rings and not helices (they are not wrapped around). The product is raised directly on a flat receiving surface, as a result of which a risk arises that the product tears off from the receiving surface along the line separating the product and the receiving surface during printing.

One of the disadvantages consists in a low robustness of the made products and the fact that the 3D object printing stages (including the printing of the three dimensional layers with the rotation of the flat receiving surface) are implemented in the accessory material («second material») environment which boosts the object production labor content and introduces limitations on the working area volume.

The necessity of the 3D printers' and 3D printing methods improvement is generally recognized. In particular, the following disadvantages must be eliminated: use of the supporting attachments, low product strength and production accuracy and the necessity of the printed products post-processing, namely, the removal of the attachments protruding beyond the product outline borders (see Fig. 1) which makes such objects unfit for serial production and end use.

The technical problem that the invention aims to solve is the creation of functional products by the additive production method on a printing device (3D printer), in particular, printing of products in curved layers that are applied on a receiving surface that can constitute a ready-made rod (cylindrical surface) or a ready-made core that becomes part of the final product or a ready-made self-reproducing core that becomes part of the final product, without the ready-made products quality deterioration and without additional finishing processing.

The technical result of the invention consists in the increasing of the robustness of the obtained products that do not require additional processing.

The technical result is achieved owing to the fact that the method for the 3D objects additive production includes stages at which: a) a digital 3D model of the specified object is created, the model is divided into the product core and product body which are separated in a layerwise manner into the flat and curved layers, respectively; the construction data is prepared; b) after that, the construction data is sent to the controlling unit; c) the product position relative the receiving surface (10) is adjusted; d) the material necessary for this process is supplied; e) zero coordinates are determined for the print head (2) position along the X-axis, for the transfer device (13) position along the Z-axis and for the second structural element (12) position along the X-axis of the unit (9) for arranging the receiving surface (10); f) the receiving surface (10) is brought into horizontal position, according to the invention; g) the first part of the substrate (26) and the enveloping lateral surface of the receiving surface (10) are produced on the receiving surface; h) the position of the receiving surface (10) is changed to vertical one; i) the second part of the substrate (27) is produced on the first part of the substrate (26); j) the core (28) is produced on the second part of the substrate (27); k) the position of the receiving surface (10) is changed to the horizontal one; l) the product body (30) is produced by applying material onto the core (28) in curved layers.

The technical result is also achieved owing to the fact that the device (1) used for the 3D objects additive production comprises at least one print head (2) for supplying the material, the same print head configured to move along the X-axis and/or the Y-axis; at least on guide (6) for moving the print head (2) along the X-axis; at least two guides (7, 8) for moving the print head (2) along the Y-axis, configured to be arranged at the opposite sides of the print head (2) across at least one guide (6) for moving the print head (2) along the X-axis; unit (9) intended for accommodation of the receiving surface (10) and the receiving surface (10) for receiving the material supplied from the print head (2); wherein the unit (9) for the receiving surface (10) accommodation comprises the first structural element (12) and is provided with the transfer device (13) effecting movement along the Z-axis that is perpendicular to the X-Y plane; wherein the first structural element (12) is configured to rotate about the X-axis and the receiving surface (10) is installed on the first structural element (12) and configured to rotate about the Z-axis; according to the invention, the device (1) additionally comprises at least one motor (3) for feeding the material, at least two motors (4, 5) for moving the print head (2), wherein the unit (9) for the receiving surface (10) accommodation additionally comprises at least the second structural element (11) that is fixed to the transfer device (13) on one side and movably connected to the first structural element (12) on the opposite side; at least one motor (14) for effecting movement along the Z-axis, at least two guides (15, 16) for effecting movement along the Z-axis, at least one motor (17) for rotating the first structural element (12) about the X-axis and at least one motor (18) for rotating the receiving surface (10) about the Z-axis; and the receiving surface (10) has cylindrical shape.

In another particular embodiment the receiving surface (10) can be arranged to be removable.

In another particular embodiment the receiving surface (10) can be arranged in the grabbing device (19).

In another particular embodiment the device (1) can comprise the coil (20) with a consumable material.

In another particular embodiment the device (1) can comprise the heating unit (21) for heating the working volume of the device (1).

In another particular embodiment the motor (17) can be arranged on the second structural element (11).

In another particular embodiment the second structural element (11) can comprise the pulley (22) connected to the motor (17) with the help of the circular belt (23).

In another particular embodiment the pulley (22) can be connected to the first structural element (12).

In another particular embodiment the motor (18) can be arranged on the first structural element (12).

In another particular embodiment the first structural element (12) can comprise the pulley (24) connected to the motor (18) with the help of the circular belt (25).

In another particular embodiment at least one motor (3) can be arranged on the print head (2).

The present invention is illustrated by drawings (Fig. 1-12).

The following is shown in the drawings:
Fig. 1 shows the produced (printed) products: a) - according to the claimed invention; b) and c) - the products made employing analogous solutions.
Fig. 2 shows the view from the front of a 3D printer.
Fig. 3 shows the view from the front of a 3D printer without the body walls.
Fig. 4 and 5 show unit (9) with various receiving surface (10) positions.
Fig. 6-11 show the product manufacturing stages according to the claimed method on the claimed device.
Fig. 12 shows the block diagram of the claimed method of the objects production.

The following item numbers are used in the figures:
1 the claimed 3D objects additive production device,
2 print head,
3 motor for feeding the material,
4 motor for moving the print head (2),
5 motor for moving the print head (2),
6 guide for moving the print head (2) along the X-axis,
7 guide for moving the print head (2) along the Y-axis,
8 guide for moving the print head (2) along the Y-axis,
9 unit for accommodating the cylindrically shaped receiving surface (10),
10 cylindrically shaped receiving surface,
11 second structural element of the unit (9),
12 first structural element of the unit (9),
13 transfer device for moving the unit (9) along the Z-axis,
14 motor of the Z-axis transfer device (13),
15 guide for moving the transfer device (13),
16 guide for moving the transfer device (13),
17 motor of the element (12),
18 motor of the receiving surface (10),
19 grabbing device,
20 coil with a consumable material,
21 device (1) working volume heating unit,
22 pulley of the element (11),
23 pulley (22) circular belt,
24 pulley of the element (12),
25 pulley (24) circular belt,
26 first part of the substrate,
27 second part of the substrate,
28 core,
29 product body.

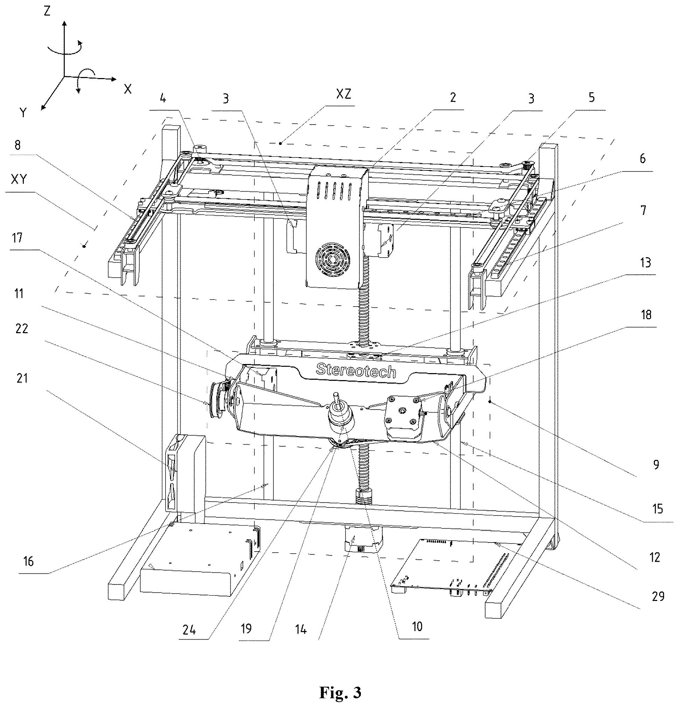

According to the invention, the device 1 (3D printer) is designed to build material 3D products by the additive production method. In one of the specific embodiments, the 3D printer comprises the following elements arranged within the body (Fig. 2): the print head 2 for supplying a thermoplastic material, the same print head being configured to move along the X-axis and/or along the Y-axis (including the possibility of moving within the X-Y plane). The device 1 comprises two motors 3 for feeding the material, the same motors being installed on the print head 2. The device also comprises two motors 4 and 5 for moving the head 2, as well as one guide 6 for moving the print head 2 along the X-axis and two guides 7 and 8 for moving the print head 2 along the Y-axis (Fig. 2 and 3). The guides 7 and 8 are arranged at the opposite sides of the print head 2 across the guide 6 (Fig. 3).

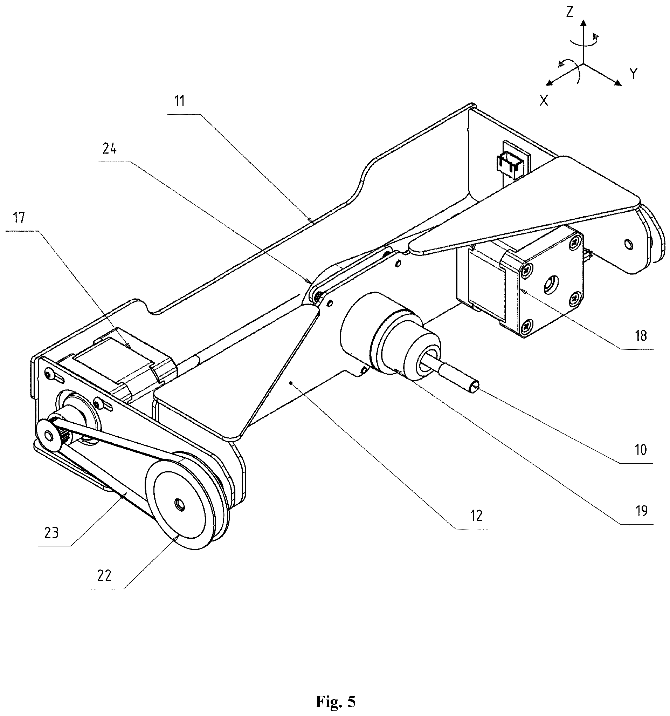

The claimed device 1 comprises the receiving surface 10 for receiving (winding, applying) of the material supplied from the print head 2 (Fig. 2-11). According to the invention the receiving surface 10 is configured cylindrical. As the receiving surface 10, e.g., a rod can be used.

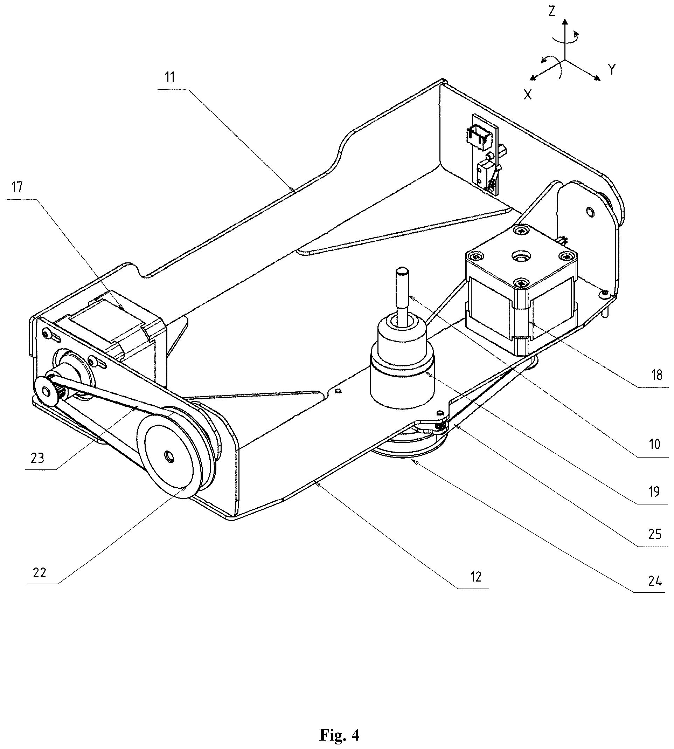

The receiving surface is arranged within the unit 9 for accommodation of the receiving surface 10 (Fig. 2-5). Unit 9 is configured as the first and second connected structural elements 12 and 11, respectively, and is equipped with the Z-axis transfer device 13, the same axis being perpendicular to the X-Y plane. The receiving surface 10 is arranged on the first structural element 12 to rotate about Z-axis and to be removable, e.g., while being placed within the grabbing device 19 which can be configured as a collet closing mechanism. That said, the element 12 can be configured, e.g., as a swing, and the transfer device 13 - as a carriage. Unit 9 comprises motor 14 and the two guides 15 and 16 for moving it along the Z-axis (Fig. 3). The second structural element 11 is fixed on the transfer device 13 and movably connected to the first structural element 12 (Fig. 4 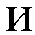 5).

The first structural element 12 is configured to rotate about the X-axis with the help of the motor 17 arranged on the second structural element 11.

The receiving surface 10 is configured to rotate about the Z-axis with the help of the motor 18.

The second structural element 11 comprises pulley 22 connected to the motor 17 with the help of the circular belt 23. The first structural element 12 comprises pulley 24 connected to the motor 18 with the help of the circular belt 25 (Fig. 4 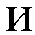 5).

The claimed 3D printer may comprise a coil 20 with a consumable thermoplastic material. That said, the coil 20 with the consumable material can be arranged both inside and outside of the printer device 1 body (Fig. 2).

The 3D printer may comprise the heating unit 21 used for heating the working volume of the device 1 (Fig. 3) and the controller 29 for controlling the print head 2 movement.

The increase of the obtained products' strength and the absence of an additional processing are achieved due to the fact that the claimed device, thanks to the print head 2 movement along the X-axis and the Y-axis and the receiving surface 10 accommodation unit 9 movement along the Z-axis, allows printing the product core with the shape repeating the product outlines; owing to the rotation about the X-axis, an automatic transfer from the product core printing to the product body printing is ensured; owing to the print head 2 movement along the Y-axis and the unit 9 movement along the Z-axis, as well as to the receiving surface 10 rotation about the Z-axis, a curved product body layers printing is ensured which allows producing strong products without additional processing.

The increase of the obtained products' strength and the absence of an additional processing are achieved due to the fact that the claimed 3D objects additive production method utilizes a multi-stage printing process comprising the printing of the product core that does not protrude beyond the product body and repeats its shape, which allows producing products without an additional processing, and the printing of the product body which is produced in curved layers, which increases the product strength.

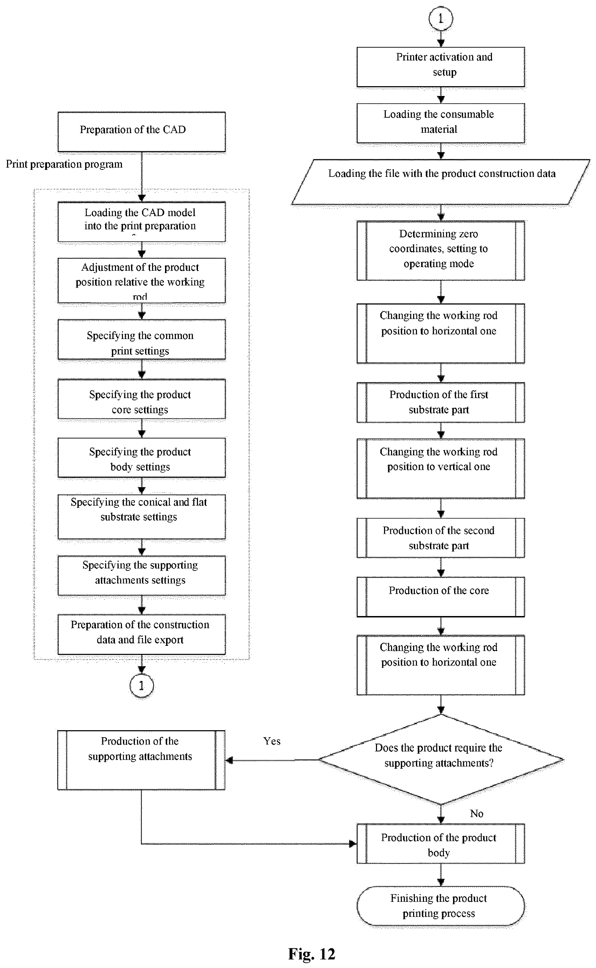

The claimed method can be implemented in the following way (the block diagram is shown in Fig. 12).

Before the start of the printing, a digital 3D model of the produced object is formed on a personal computer using graphics software, e.g., Kompas 3D, Autodesk Inventor, Autodesk Fusion 360, SolidWorks, Blender, 3ds Max, Google SketchUp, the dimensions of the same 3D model corresponding to the printer parameters; the model is divided into the constituent parts which are separated in a layerwise manner into the flat and curved layers, respectively, and the construction data is prepared.

After this, the formed model is loaded to the print preparation software that provides for the model division into the constituent parts (the product core and the product body), for the separation of these parts in a layerwise manner into the flat and curved layers, respectively (in the process, a layer is formed as a result of a surface (e.g., a cylindrical surface) intersecting with the product model, wherein each subsequent layer differs from the previous one by the layer thickness (for the rotary surfaces this is the distance between the moving line and the rotation axis, for the transition surfaces this is the offset along the construction vector)), and for the preparation and generation of the construction data (the movement sequence code), after which the construction data is sent to the controlling unit. Further, the position of the product relative the receiving surface 10 of the printer is adjusted and the intersecting surface type is selected. The intersecting surface can be any kinematic surface (ruled, non-ruled, rotary, cyclic, helical etc.) After this, the common print settings are configured in the program: the print head 2 movement speed, the work piece cooling temperature (by controlling the product cooling fan mode of operation), the consumable material characteristics etc. For each of the materials, the corresponding heater temperature for melting the plastic in the print head 2 is chosen, as well as the working chamber heating temperature for printing the product.

Further, the necessary parameters and conditions for the product parts (product core 28 and product body 30)' and auxiliary structures (the first part of the substrate 26, the second part of the substrate 27 and the supporting attachments)' printing are defined in the program.

For the product core 28, its dimensions (depending on the chosen cross-section surface), the flat printing layer thickness, the continuous outer shell thickness, the density of the internal filling of the core by the material (from 0 (for the hollow items production) to 100%) and the filling pattern parameters are determined. The software defines the shape of the core 28 as the result of the product' and the chosen cross-section surface' intersection. That said, if the chosen cross-section surface is a rotary surface (e.g., a cylindrical one), the lateral surface of the core 28 corresponds to the chosen cross-section surface with the specified core dimensions (the distance from the rotation axis to the moving line). The lower base of the core 28 corresponds to the lower product surface defined by the lateral surface of the core 28, and the upper base of the core 28 corresponds to the upper product surface defined by the lateral surface of the core 28.

For the product body 30, the curved printing layer thickness, the continuous outer shell thickness, the density of the internal filling of the product by the material (from 0 (for the hollow items production) to 100%), the filling pattern parameters and the necessity of the supporting attachments' construction are specified.

For the first and second part of the substrate 26 and 27, the filling pattern parameters are adjusted. The software automatically generates the dimensions of the first and second part of the substrate 26 and 27 based on the core 28 dimensions. The first part of the substrate 26 is designed for holding the product on the receiving surface 10. The second part of the substrate 27 is designed as the product core 28 initial construction plane.

For the supporting attachments, the density and the filling template parameters are specified. The supporting attachments can be built from the same material as the product, using the same print head nozzle. The supporting attachments can be built from another material, using the second nozzle. In the process, the software automatically generates the supporting attachments with a clearance relative to the printed product, to ensure its easy removal from the finished product surface.

Further, the software prepares the construction data represented as a computer command language, e.g., the g-code. For each flat and curved layer the software determines the outlines and then fills the layer based on the percentage value and the filling pattern chosen by the user. After the whole model is traversed, the supporting structures are built; then the construction data is exported to the prepared file.

After the construction data is prepared, the connection with the printer is established. The operability of all printer mechanical units is checked, as well as the availability of the installed consumable materials. Afterwards, the prepared task is loaded through a network interface or using a portable storage device.

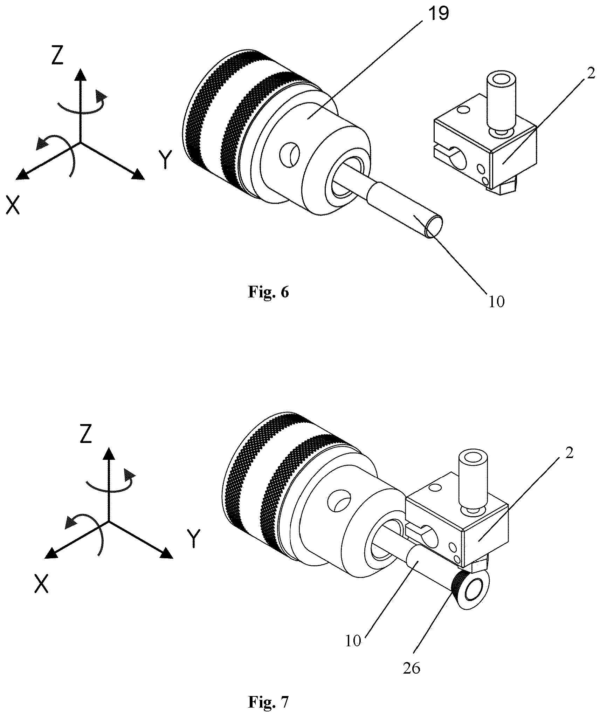

When all the preparations are completed, the printing process is initiated (Fig. 6). The controller controls the movement of the print head 2 and the operation of the unit 9 Z-axis transfer device 13 with the help of the signals sent to motors 3, 4, 5, 14, 17 and 18. After the printing process initiation the printer controller heats up the print head 2 nozzle and the working chamber up to the specified temperature level, supplies the material, conducts the search and determines the print head 2 X-axis and Y-axis positions' zero coordinates and the first structural element 12 Z-axis transfer device 13' zero coordinates for its movement about the X-axis, after which it initiates the product printing process proper on the receiving surface 10.

Using unit 9, the receiving cylindrical surface 10 is brought to horizontal position (the cylindrical surface axis is located in the plane parallel to the X-Y plane) - Fig. 6. The Z-axis transfer device 13 lifts the unit 9 up to the distance equaling the thickness of the layer between the surface 10 and the print head 2 nozzle. The controller starts the first substrate 26 part' production program module. The first part of the substrate 26 and the enveloping lateral surface of the receiving surface (10) are produced on the receiving cylindrical surface 10. The base of the first part of the substrate 26 can protrude beyond the borders of the receiving surface 10 and be located along the butt end of the latter (Fig. 7).

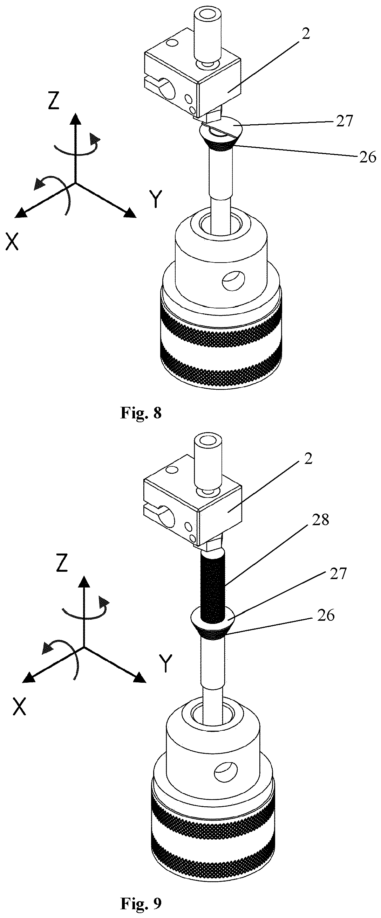

Afterwards, the controller starts the receiving surface 10' position change program module and sends the signal to the Z-axis transfer device 13 compelling it to go down as to avoid collision with the print head 2 and the signal to the unit 9 compelling it to change the position of the surface 10 to the vertical one (the axis of the rod is located in the plane that is parallel to the X-Z plane) - Fig. 8. Afterwards, the production program module is started for the second part of the substrate 27 produced on the first part of the substrate 26 (based on the first part of the substrate 26).

Then the controller prints the product core 28 in flat layers on the surface of the second part of the substrate 27 (Fig. 9). Then the position change program module is started again and the unit 9 positions the surface 10 horizontally (the axis of the rod is positioned in the plane that is parallel to the X-Y plane). The Z-axis transfer device 13 goes up, together with the unit 9, to the distance equaling the thickness of the layer between the surface of the core 28 and the print head 2 nozzle.

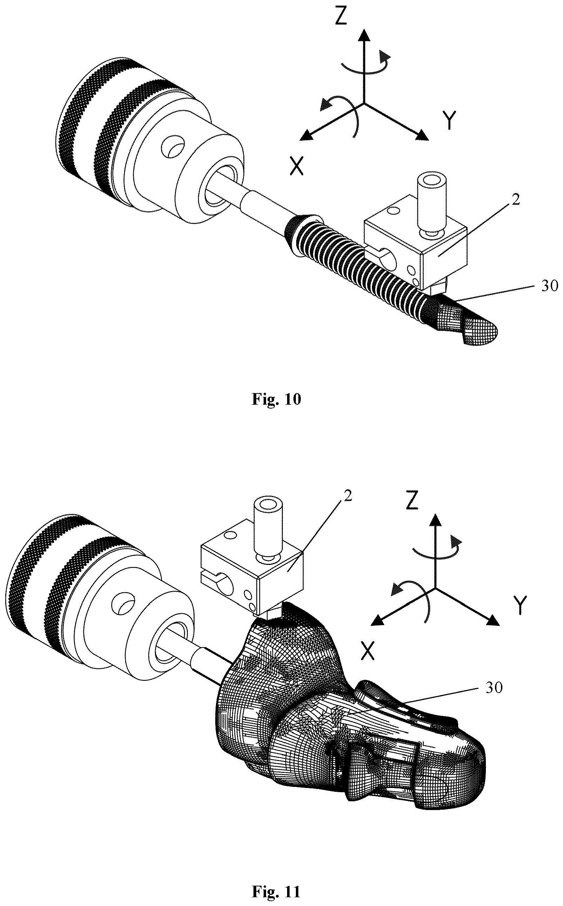

The controller starts the supporting attachments production program module (if required for the specific product) and then the product body 30 production program module (Fig. 10 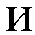 11). The product body 30 is produced by applying the material onto the core 28 in curved layers.

Both product body 30 and the supporting attachments are produced in a layerwise manner in curved layers that boost the produced item strength(winding). The next layer is applied onto the previous one layer-by-layer until the product construction process is finished.

A layer can have one or more parts. Each part includes one or more outlines, insets, skins and infill areas.

A layer part is a separate area inside a layer that does not touch other parts.

An outline is a nonprintable intersection of the model and of the intersection surface.

Insets constitute a printable outline wall forming the shape of the product.

Skins are printable surfaces that are 100% filled and form the shape of the product.

The infill areas are the printable surfaces with a specified degree of filling that form the internal structure of the product.

The number of walls can be set in the print preparation program; a value of 0 (the absence of walls) or more can be specified. For the function of filling, the parameters of the filling density, the filling angle, the filling pattern and the filling overlap (the degree to which the beginning and end of the filling lines cross the internal outline insets) can be set up.

The filling density can be specified in the print preparation program; a value from 0 (the absence of filling) up to 100% (solid filling) can be specified. That said, the filling density depends on the number of filling lines applied inside of the outline.

The filling angle determines the angle between the filling line and the axis of ordinates of the layer surface coordinate frame. For the filling angle, the value of 0 to 90 degrees can be specified. That said, the filling angle value can be varied from layer to layer, the set filling angle value being alternated with the value corresponding to the turn at the specified angle (equaling 90 degrees by default), for the formation of a net structure. By default, the accepted filling angle value equals 45 degrees.

The method contemplates curved and flat filling patterns for the production of various product parts and auxiliary structures. The curved filling patterns are used for the production of the first part 26 of the substrate, of the supporting structures and of the product body 30.

The method uses three variants of the curved filling pattern. The "spooling" variant of filling characterizes the continuity of the material feeding, when a sole filling line constitutes all the filling. The "winding" filling variant uses a helical filling curve. These methods are used for filling the layers formed by the rotary surfaces. The variant involving a line proceeding along a surface is generally used for filling the layers along any surfaces.

The curved filling pattern sets the filling line appearance. By default, the filling line constitutes a line on a curved layer surface, proceeding from the lower product surface to the upper product surface. The shape of the line depends on the filling pattern and can be curved, zigzagging or any other.

Flat filling patterns are used for the production of the second part 27 of the substrate and of the product core 28. The used flat filling patterns are the same as those used during a regular 3D printing, known from the prior art.

## Claims

1. A 3D objects additive production device (1) comprising:
- at least one print head (2) for feeding material, configured to move along a X-axis and/or along a Y-axis;
- at least one guide (6) for moving the print head (2) along the X-axis;
- at least two guides (7, 8) for moving the print head (2) along the Y-axis, configured to be arranged at the opposite sides of the print head (2) across at least one guide (6) for moving the print head (2) along the X-axis;
- a unit (9) accommodating a cylindrically shaped receiving surface (10) for receiving the material supplied from the print head (2),
wherein the unit (9) for accommodating the cylindrically shaped receiving surface (10) comprises a first structural element (12) and is equipped with a transfer device (13) providing movement along a Z-axis perpendicular to the X-Y plane, the said first structural element (12) being configured to rotate about the X-axis and the cylindrically shaped receiving surface (10) being arranged on the first structural element (12) to rotate around the Z-axis,
wherein the device (1) additionally comprises at least one motor (3) for feeding the material and at least two motors (4, 5) for moving the print head (2),
wherein the unit (9) for accommodating the cylindrically shaped receiving surface (10) additionally comprising at least a second structural element (11) fixed on the transfer device (13) on one side and movably connected to the first structural element (12) on the opposite side, at least one motor (14) for moving along the Z-axis, at least two guides (15, 16) for moving along the Z-axis, at least one motor (17) for rotating the first structural element (12) about the X-axis and at least one motor (18) for rotating the cylindrically shaped receiving surface (10) about the Z-axis.

2. Device (1) according to claim 1, wherein the receiving surface (10) is arranged to be removable.

3. Device (1) according to claims 2, wherein the receiving surface (10) is arranged in a grabbing device (19).

4. Device (1) according to claim 1, wherein the device (1) comprises a coil (20) with a consumable material.

5. Device (1) according to claim 1, wherein the device (1) comprises a heating unit (21) for heating the working volume of the device (1).

6. Device (1) according to claim 1, wherein the motor (17) for rotating the first structural element (12) is arranged on the second structural element (11).

7. Device according to claim 1, wherein the second structural element (11) comprises a pulley (22) connected to the motor (17) by means of a circular belt (23).

8. Device (1) according to claim 7, wherein the pulley (22) is connected to the first structural element (12).

9. Device (1) according to claim 1, wherein the motor (18) for rotating the cylindrically shaped receiving surface (10) is arranged on the first structural element (12).

10. Device (1) according to claim 1, wherein the first structural element (12) comprises a pulley (24) connected to the motor (18) for rotating the cylindrically shaped receiving surface (10) by means of a circular belt (25).

11. Device (1) according to claim 1, wherein at least one motor (3) for feeding the material is arranged on the print head (2).

12. 3D objects additive production method using the 3D objects additive production device (1) according to claim 1, wherein the method comprises the following steps:
a) creating a digital 3D model of a specified object, dividing the model onto a product core (28) and a product body (30), separating them in a layerwise manner into a flat layer and a curved layer, respectively, and preparing construction data;
b) subsequent sending of the construction data to a controlling unit;
c) adjusting a product position relative to the cylindrically shaped receiving surface (10);
d) feeding the necessary material for the process;
e) determining zero coordinates for the position of the print head (2) on a X-axis, the transfer device (13) on a Z-axis and the first structural element (12) about the X-axis of the unit (9) for the cylindrically shaped receiving surface (10) accommodation;
f) bringing the cylindrically shaped receiving surface (10) into horizontal position,
wherein
g) a first part of a substrate (26) and a enveloping lateral surface of the cylindrically shaped receiving surface (10) are produced on the cylindrically shaped receiving surface (10);
h) changing the cylindrically shaped receiving surface (10) position into vertical one;
i) producing a second part of the substrate (27) on the first part of the substrate (26);
j) producing the product core (28) on the second part of the substrate (27);
k) changing the cylindrically shaped receiving surface (10) position into horizontal one;
1) producing the product body (30) by applying the material onto the core (28) in curved layers.

## Patentansprüche

1. Vorrichtung (1) zur additiven bzw. generativen Fertigung von 3D-Objekten, umfassend:
- zumindest einen Druckkopf (2) zum Zuführen von Material, der konfiguriert ist, sich entlang einer X-Achse und/oder entlang einer Y-Achse zu bewegen;
- zumindest eine Führung (6) zum Bewegen des Druckkopfs (2) entlang der X-Achse;
- zumindest zwei Führungen (7, 8) zum Bewegen des Druckkopfs (2) entlang der Y-Achse, die konfiguriert sind, an den gegenüberliegenden bzw. entgegengesetzten Seiten des Druckkopfs (2) über zumindest eine Führung (6) zum Bewegen des Druckkopfs (2) entlang der X-Achse angeordnet zu sein;
- eine Einheit (9), die eine zylindrisch geformte Aufnahmefläche bzw. - oberfläche (10) zum Aufnehmen des von dem Druckkopf (2) zugeführten Materials unterbringt,
wobei die Einheit (9) zum Unterbringen der zylindrisch geformten Aufnahmefläche (10) ein erstes Strukturelement (12) umfasst und mit einer Transfervorrichtung (13) ausgestattet ist, die eine Bewegung entlang einer Z-Achse senkrecht zu der X-Y-Ebene bereitstellt, wobei das erste Strukturelement (12) konfiguriert ist, sich um die X-Achse zu drehen, und die zylindrisch geformte Aufnahmefläche (10) auf bzw. an dem ersten Strukturelement (12) angeordnet ist, um sich um die Z-Achse zu drehen,
wobei die Vorrichtung (1) zusätzlich zumindest einen Motor (3) zum Zuführen des Materials und zumindest zwei Motoren (4, 5) zum Bewegen des Druckkopfs (2) umfasst,
wobei die Einheit (9) zum Unterbringen der zylindrisch geformten Aufnahmefläche (10) zusätzlich zumindest ein zweites Strukturelement (11), das auf bzw. an der Transfervorrichtung (13) auf einer Seite fixiert bzw. befestigt und beweglich mit dem ersten Strukturelement (12) auf der gegenüberliegenden bzw. entgegengesetzten Seite verbunden ist, zumindest einen Motor (14) zum Bewegen entlang der Z-Achse, zumindest zwei Führungen (15, 16) zum Bewegen entlang der Z-Achse, zumindest einen Motor (17) zum Drehen des ersten Strukturelements (12) um die X-Achse und zumindest einen Motor (18) zum Drehen der zylindrisch geformten Aufnahmefläche (10) um die Z-Achse umfasst.

2. Vorrichtung (1) nach Anspruch 1, wobei die Aufnahmefläche (10) abnehmbar angeordnet ist.

3. Vorrichtung (1) nach Anspruch 2, wobei die Aufnahmefläche (10) in einer Greifvorrichtung (19) angeordnet ist.

4. Vorrichtung (1) nach Anspruch 1, wobei die Vorrichtung (1) eine Spule (20) mit einem Verbrauchsmaterial umfasst.

5. Vorrichtung (1) nach Anspruch 1, wobei die Vorrichtung (1) eine Heizeinheit (21) zum Heizen des Arbeitsvolumens der Vorrichtung (1) umfasst.

6. Vorrichtung (1) nach Anspruch 1, wobei der Motor (17) zum Drehen des ersten Strukturelements (12) auf bzw. an dem zweiten Strukturelement (11) angeordnet ist.

7. Vorrichtung nach Anspruch 1, wobei das zweite Strukturelement (11) eine Riemenscheibe bzw. Umlenkrolle (22) umfasst, die mittels eines Rundriemens (23) mit dem Motor (17) verbunden ist.

8. Vorrichtung (1) nach Anspruch 7, wobei die Riemenscheibe (22) mit dem ersten Strukturelement (12) verbunden ist.

9. Vorrichtung (1) nach Anspruch 1, wobei der Motor (18) zum Drehen der zylindrisch geformten Aufnahmefläche (10) auf bzw. an dem ersten Strukturelement (12) angeordnet ist.

10. Vorrichtung (1) nach Anspruch 1, wobei das erste Strukturelement (12) eine Riemenscheibe bzw. Umlenkrolle (24) umfasst, die mittels eines Rundriemens (25) mit dem Motor (18) zum Drehen der zylindrisch geformten Aufnahmefläche (10) verbunden ist.

11. Vorrichtung (1) nach Anspruch 1, wobei zumindest ein Motor (3) zum Zuführen des Materials auf bzw. an dem Druckkopf (2) angeordnet ist.

12. Verfahren zur additiven bzw. generativen Fertigung von 3D-Objekten unter Verwendung der Vorrichtung (1) zur additiven bzw. generativen Fertigung von 3D-Objekten nach Anspruch 1, wobei das Verfahren die folgenden Schritte umfasst:
a) Erzeugen eines digitalen 3D-Modells eines spezifizierten Objekts, Aufteilen des Modells auf einen Produktkern (28) und einen Produktkörper (30), schichtweises Trennen derselben in eine flache bzw. eine gekrümmte Schicht und Vorbereiten von Konstruktionsdaten;
b) nachfolgendes Senden der Konstruktionsdaten an eine Steuer- bzw. Regeleinheit;
c) Einstellen bzw. Anpassen einer Produktposition relativ zu der zylindrisch geformten Aufnahmefläche (10);
d) Zuführen des erforderlichen Materials für den Prozess;
e) Bestimmen von Nullkoordinaten für die Position des Druckkopfes (2) auf einer X-Achse, der Transfervorrichtung (13) auf einer Z-Achse und des ersten Strukturelements (12) um die X-Achse der Einheit (9) zum Unterbringen der zylindrisch geformten Aufnahmefläche (10);
f) Bringen der zylindrisch geformten Aufnahmefläche (10) in eine horizontale Position, wobei
g) ein erster Teil eines Substrats (26) und eine umhüllende laterale Fläche bzw. Oberfläche der zylindrisch geformten Aufnahmefläche (10) auf bzw. an der zylindrisch geformten Aufnahmefläche (10) gefertigt werden;
h) Ändern der Position der zylindrisch geformten Aufnahmefläche (10) in eine vertikale Position;
i) Fertigen eines zweiten Teils des Substrats (27) auf bzw. an dem ersten Teil des Substrats (26);
j) Fertigen des Produktkerns (28) auf bzw. an dem zweiten Teil des Substrats (27);
k) Ändern der Position der zylindrisch geformten Aufnahmefläche (10) in eine horizontale Position;
l) Fertigen des Produktkörpers (30) durch Aufbringen des Materials auf den Kern (28) in gekrümmten bzw. gebogenen Schichten.

## Revendications

1. Dispositif de production additive d'objets 3D (1) comprenant :
- au moins une tête d'impression (2) pour alimenter du matériau, configurée pour se déplacer le long d'un axe X et/ou le long d'un axe Y ;
- au moins un guide (6) pour déplacer la tête d'impression (2) le long de l'axe X ;
- au moins deux guides (7, 8) pour déplacer la tête d'impression (2) le long de l'axe Y, configurés pour être agencés au niveau des côtés opposés de la tête d'impression (2) à travers au moins un guide (6) pour déplacer la tête d'impression (2) le long de l'axe des X ;
- une unité (9) logeant une surface de réception de forme cylindrique (10) pour recevoir le matériau fourni par la tête d'impression (2),
dans lequel l'unité (9) pour loger la surface de réception de forme cylindrique (10) comprend un premier élément structurel (12) et est équipée d'un dispositif de transfert (13) fournissant un mouvement le long d'un axe Z perpendiculaire au plan X-Y, ledit premier élément structurel (12) étant configuré pour tourner autour de l'axe X et la surface de réception de forme cylindrique (10) étant agencée sur le premier élément structurel (12) pour tourner autour de l'axe Z,
dans lequel le dispositif (1) comprend de plus au moins un moteur (3) pour alimenter le matériau et au moins deux moteurs (4, 5) pour déplacer la tête d'impression (2),
dans lequel l'unité (9) pour loger la surface de réception de forme cylindrique (10) comprend de plus au moins un second élément structurel (11) fixé sur le dispositif de transfert (13) d'un côté et connecté de manière mobile au premier élément structurel (12) sur le côté opposé, au moins un moteur (14) pour se déplacer le long de l'axe Z, au moins deux guides (15, 16) pour se déplacer le long de l'axe Z, au moins un moteur (17) pour faire tourner le premier élément structurel (12) autour de l'axe X et au moins un moteur (18) pour faire tourner la surface de réception de forme cylindrique (10) autour de l'axe Z.

2. Dispositif (1) selon la revendication 1, dans lequel la surface de réception (10) est agencée pour être amovible.

3. Dispositif (1) selon la revendication 2, dans lequel la surface de réception (10) est agencée dans un dispositif de saisie (19).

4. Dispositif (1) selon la revendication 1, dans lequel le dispositif (1) comprend une bobine (20) avec un matériau consommable.

5. Dispositif (1) selon la revendication 1, dans lequel le dispositif (1) comprend une unité de chauffage (21) pour chauffer le volume de travail du dispositif (1).

6. Dispositif (1) selon la revendication 1, dans lequel le moteur (17) pour faire tourner le premier élément structurel (12) est agencé sur le second élément structurel (11).

7. Dispositif selon la revendication 1, dans lequel le second élément structurel (11) comprend une poulie (22) reliée au moteur (17) au moyen d'une courroie circulaire (23).

8. Dispositif (1) selon la revendication 7, dans lequel la poulie (22) est reliée au premier élément structurel (12).

9. Dispositif (1) selon la revendication 1, dans lequel le moteur (18) pour faire tourner la surface de réception de forme cylindrique (10) est agencé sur le premier élément structurel (12).

10. Dispositif (1) selon la revendication 1, dans lequel le premier élément structurel (12) comprend une poulie (24) reliée au moteur (18) pour faire tourner la surface de réception de forme cylindrique (10) au moyen d'une courroie circulaire (25).

11. Dispositif (1) selon la revendication 1, dans lequel au moins un moteur (3) pour alimenter le matériau est agencé sur la tête d'impression (2).

12. Procédé de production additive d'objets 3D utilisant le dispositif de production additive d'objets 3D (1) selon la revendication 1, dans lequel le procédé comprend les étapes suivantes consistant à :
a) créer un modèle 3D numérique d'un objet spécifié, diviser le modèle en un noyau de produit (28) et un corps de produit (30), les séparer d'une manière par couche en une couche plate et une couche incurvée, respectivement, et préparer des données de construction ;
b) envoyer ultérieurement les données de construction à une unité de commande ;
c) ajuster une position de produit par rapport à la surface de réception de forme cylindrique (10) ;
d) alimenter le matériau nécessaire pour le processus ;
e) déterminer des coordonnées nulles pour la position de la tête d'impression (2) sur un axe X, du dispositif de transfert (13) sur un axe Z et du premier élément structurel (12) autour de l'axe X de l'unité (9) pour logement de la surface de réception de forme cylindrique (10) ;
f) amener la surface de réception de forme cylindrique (10) en position horizontale,
dans lequel
g) une première partie d'un substrat (26) et une surface latérale enveloppante de la surface de réception de forme cylindrique (10) sont produites sur la surface de réception de forme cylindrique (10) ;
h) changer la position de la surface de réception de forme cylindrique (10) en une position verticale ;
i) produire une seconde partie du substrat (27) sur la première partie du substrat (26) ;
j) produire le noyau de produit (28) sur la seconde partie du substrat (27) ;
k) changer la position de la surface de réception de forme cylindrique (10) en une position horizontale ;
l) produire le corps de produit (30) en appliquant le matériau sur le noyau (28) en couches incurvées.
